# EUROPEAN PATENT APPLICATION

(11) **EP 3 614 653 A1**
(43) Date of publication of application: **26.02.2020**
(21) Application number: 18787023.3
(22) Date of filing: 10.04.2018
(51) Int. Cl.: H04M 1/725, G01V 13/00

(54) **CALIBRATION METHOD AND DEVICE FOR PROXIMITY SENSOR**

(30) Priority: 18.04.2017 CN 201710254788
(71) Applicant: ZTE Corporation, Shenzhen, Guangdong 518057 (CN)
(72) Inventor: CHEN, Qingwei, Shenzhen Guangdong 518057 (CN)
(74) Representative: Hervouet-Malbec, Sylvie
(86) International application number: PCT/CN2018/082490
(87) International publication number: WO 2018/192393

(57) **Abstract**

A calibration method for a proximity sensor is disclosed, including: collecting static data of the proximity sensor; calculating an average value of the static data to obtain an average static data of the proximity sensor; comparing the average static data with a preset range; and changing, if the average static data exceeds the preset range, a number of light beams reaching the proximity sensor, such that the static data is triggered to change according to a change in the number of the light beams sensed by the proximity sensor. A calibration device for a proximity sensor is also disclosed.

## Description

### TECHNICAL FIELD

The present disclosure relates to sensor adjustment techniques, and more particularly, to a calibration method and device for a proximity sensor.

### BACKGROUND

A calibration of a proximity sensor utilized by a terminal is mainly implemented by software, a main process thereof may be: obtaining a current static detection data of the proximity sensor; configuring a proximity threshold and a remote threshold for the obtained static data in groups/segments; reducing a value of the static data if the static data is too large, and conversely, increasing the value of the static data if the static data is too small, such that the adjusted static data value meets a requirement of threshold range. In practical applications, bottom noise saturation usually occurs due to the adjusted static data being large, and a problem of "black hair-zero distance" usually occurs due to the adjusted static data being small.

### SUMMARY

The following is an overview of the subject matter described in detail herein. This summary is not intended to limit the scope of the claims.

Embodiments of the present disclosure provides a calibration method and device for a proximity sensor, which can realize real-time monitoring of static data of the proximity sensor, and can solve a deviation of an average static data by adjusting a hardware apparatus of the proximity sensor, such that the proximity sensor is in an optimal state.

An embodiment of the present disclosure provides a calibration method for a proximity sensor, including: collecting static data of the proximity sensor; calculating an average value of the static data to obtain an average static data of the proximity sensor; comparing the average static data with a preset range; and changing, if the average static data exceeds the preset range, a number of light beams reaching the proximity sensor, such that the static data is triggered to change according to a change in the number of the light beams sensed by the proximity sensor.

In an exemplary embodiment, the changing the number of light beams reaching the proximity sensor such that the static data is triggered to change according to the change in the number of the light beams sensed by the proximity sensor includes: changing an effective working distance of lens of the proximity sensor by adjusting a position of the lens of the proximity sensor, to trigger the number of light beams reaching the proximity sensor through the lens to change with the effective working distance, such that the static data is triggered to change according to the change in the number of the light beams sensed by the proximity sensor.

In an exemplary embodiment, the changing the effective working distance of the lens of the proximity sensor by adjusting the position of the lens of the proximity sensor includes: triggering, by reducing the effective working distance of the lens, a distance from the lens to a light source of the proximity sensor to be reduced synchronously, and triggering the number of light beams reaching the proximity sensor through the lens to be synchronously increased, such that the static data is synchronously increased according to an increase in the number of the light beams sensed by the proximity sensor; or triggering, by increasing the effective working distance of the lens, the distance from the lens to the light source of the proximity sensor to be increased synchronously, and triggering the number of light beams reaching the proximity sensor through the lens to be synchronously reduced, such that the static data is synchronously reduced according to a reduction in the number of the light beams sensed by the proximity sensor.

In an exemplary embodiment, the changing the effective working distance of the lens of the proximity sensor by adjusting the position of the lens of the proximity sensor includes: sending a forward command generating a forward current to a coil motor, and triggering the coil motor to generate a magnetic force that attracts mutually with a magnetic component in the lens of the proximity sensor, such that the lens moves in a direction away from a light source of the proximity sensor under the magnetic force, to increase the effective working distance of the lens of the proximity sensor; or sending a reverse command generating a reverse current to the coil motor, and triggering the coil motor to generate a magnetic force that repels with the magnetic component in the lens of the proximity sensor, such that the lens moves in a direction approaching the light source of the proximity sensor under the magnetic force, to reduce the effective working distance of the lens of the proximity sensor.

In an exemplary embodiment, the changing the effective working distance of the lens of the proximity sensor by adjusting the position of the lens of the proximity sensor includes: sending a forward command generating a forward current to a coil motor, and driving, by the coil motor, a crankshaft connected to the lens of the proximity sensor to move forward, such that the lens moves in a direction away from a light source of the proximity sensor, to increase the effective working distance of the lens of the proximity sensor; or sending a reverse command generating a reverse current to the coil motor, and driving, by the coil motor, the crankshaft connected to the lens of the proximity sensor to move reversely, such that the lens moves in a direction approaching the light source of the proximity sensor, to reduce the effective working distance of the lens of the proximity sensor.

An embodiment of the present disclosure further provides a calibration device for a proximity sensor, including: a numerical collector configured to collect static data of the proximity sensor; a numerical calculator configured to calculate an average value of the static data to obtain an average static data of the proximity sensor; a numerical comparator configured to compare the average static data with a preset range; and a driver configured to change a number of light beams reaching the proximity sensor, such that the static data is triggered to change according to a change in the number of the light beams sensed by the proximity sensor.

In an exemplary embodiment, the driver is further configured to change an effective working distance of lens of the proximity sensor by adjusting a position of the lens of the proximity sensor, to trigger the number of light beams reaching the proximity sensor through the lens to change with the effective working distance, such that the static data is triggered to change according to the change in the number of the light beams sensed by the proximity sensor.

In an exemplary embodiment, the driver is further configured to: trigger, by reducing the effective working distance of the lens, a distance from the lens to a light source of the proximity sensor to be reduced synchronously, and trigger the number of light beams reaching the proximity sensor through the lens to be synchronously increased, such that the static data is synchronously increased according to an increase in the number of the light beams sensed by the proximity sensor, or trigger, by increasing the effective working distance of the lens, the distance from the lens to the light source of the proximity sensor to be increased synchronously, and trigger the number of light beams reaching the proximity sensor through the lens to be synchronously reduced, such that the static data is synchronously reduced according to a reduction in the number of the light beams sensed by the proximity sensor.

In an exemplary embodiment, the lens is mounted with a magnetic component; the driver includes a controller, a signal interface and a coil motor, wherein the controller is configured to send a forward command generating a forward current to the signal interface; the signal interface is configured to send the forward command from the controller to the coil motor; and the coil motor is configured to receive the forward command from the signal interface, generate the forward current, and form a magnetic force that attracts mutually with the magnetic component in the lens, such that the lens moves in a direction away from a light source of the proximity sensor under the magnetic force, to increase the effective working distance of the lens of the proximity sensor; the controller is further configured to send a reverse command generating a reverse current to the signal interface; the signal interface is further configured to send the reverse command from the controller to the coil motor; and the coil motor is further configured to receive the reverse command from the signal interface, generate the reverse current, and form a magnetic force that repels with the magnetic component in the lens, such that the lens moves in a direction approaching the light source of the proximity sensor under the magnetic force, to reduce the effective working distance of the lens of the proximity sensor.

In an exemplary embodiment, the lens is mounted with a crankshaft connected to the driver, the driver includes a controller, a signal interface and a coil motor, wherein the controller is configured to send a forward command generating a forward current to the signal interface; the signal interface is configured to send the forward command from the controller to the coil motor; and the coil motor is configured to receive the forward command from the signal interface, and drive the crankshaft connected to the lens of the proximity sensor to move forward, such that the lens moves in a direction away from a light source of the proximity sensor, to increase the effective working distance of the lens of the proximity sensor; the controller is further configured to send a reverse command generating a reverse current to the signal interface; the signal interface is further configured to send the reverse command from the controller to the coil motor; and the coil motor is further configured to receive the reverse command from the signal interface, and drive the crankshaft connected to the lens of the proximity sensor to move reversely, such that the lens moves in a direction approaching the light source of the proximity sensor, to reduce the effective working distance of the lens of the proximity sensor.

An embodiment of the present disclosure further provides a computer readable storage medium storing thereon computer executable instructions that, when executed by a processor, cause the processor to perform the method described above.

A calibration method and device for a proximity sensor desired to be provided by embodiments of the present disclosure includes: calculating static data collected by a proximity sensor to obtain average static data of the proximity sensor; comparing the average static data with a preset range; and changing, if the average static data exceeds the preset range, a number of light beams reaching the proximity sensor, such that the static data is triggered to change according to a change in the number of the light beams sensed by the proximity sensor. As such, the proximity sensor can be directly adjusted to ensure the accuracy of the average static data of the proximity sensor, avoiding problems of bottom noise saturation and "black hair-zero distance" caused by software calibration.

Other aspects will be apparent upon reading and understanding the drawings and the detailed description.

### BRIEF DESCRIPTION OF THE DRAWINGS

FIG. 1 is a schematic flow chart illustrating an implementation process of a calibration method for a proximity sensor according to an embodiment of the present disclosure;
FIG. 2 is a schematic diagram illustrating a structure of a calibration device for a proximity sensor according to an embodiment of the present disclosure;
FIG. 3 is a flow chart illustrating an implementation process of a proximity sensor with a magnetic component in Embodiment 1 of the present disclosure;
FIG. 4 is a side view of the proximity sensor with the magnetic component in Embodiment 1 of the present disclosure;
FIG. 5 is a bottom view of the lens of the proximity sensor with the magnetic component in Embodiment 1 of the present disclosure;
FIG. 6 is a schematic diagram of a process of changing an effective working distance of a lens of a proximity sensor with a magnetic component in Embodiment 1 of the present disclosure;
FIG. 7 is a flow chart illustrating a calibration process of a proximity sensor with a crankshaft in Embodiment 2 of the present disclosure; and
FIG. 8 is a side view of the proximity sensor with the crankshaft in Embodiment 2 of the present disclosure.

### DETAILED DESCRIPTION

For understanding of features and technical contents of embodiments of the present disclosure in detail, implementations of the embodiments of the present disclosure are described in detail with reference to the accompanying drawings, which are merely for reference and illustration, and are not intended to limit the scope of the present disclosure.

The solution described in the present disclosure may be used alone or applied in a terminal, and the terminal includes but is not limited to a mobile phone, a tablet computer, a wearable smart device, a desktop computer, and a camera. Through the solution described in the present disclosure, monitoring of an object approaching or leaving the terminal may be achieved more accurately, ensuring that the proximity sensor is in a best hardware condition for consistency of average static data difference.

Before the present disclosure is further described in detail, nouns and terms involved in the embodiments of the present disclosure are explained. The nouns and terms involved in the embodiments of the present disclosure are explained as follows.

The static data refers to data obtained by analog-to-digital conversion to light received from a working light unit, in a case where there is no shelter on the proximity sensor except a device for filtering out light of a wavelength similar as that of light emitted from the working light unit. An average value of the static data is obtained by performing data collection and calculation on the proximity sensor and calculation, and an average static data is generally obtained by performing data collection of a fixed frequency on the proximity sensor during a fixed period and calculation.

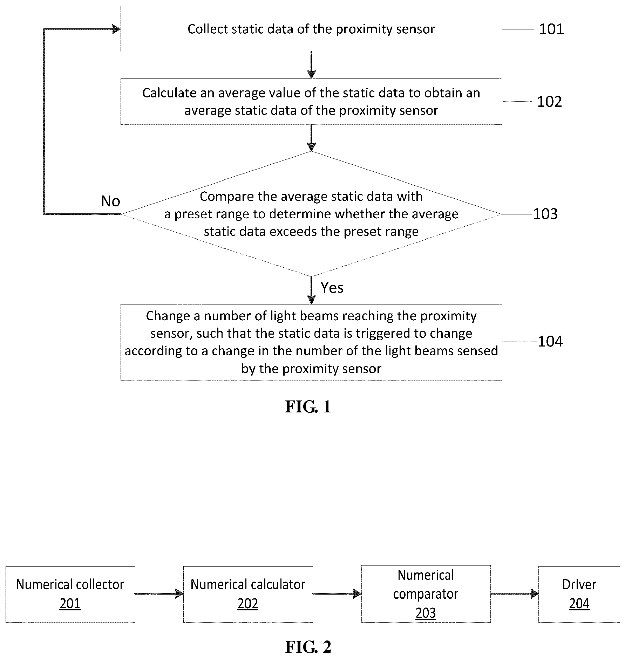

FIG. 1 is a schematic flow chart of an implementation process of a calibration method for a proximity sensor according to an embodiment of the present disclosure. As shown in FIG. 1, the implementation process of the calibration method for the proximity sensor in an embodiment of the present disclosure includes the following steps.

At step 101, static data of the proximity sensor is collected.

At step 102, an average value of the static data is calculated to obtain an average static data of the proximity sensor.

At step 103, the average static data is compared with a preset range to determine whether the preset range is exceeded, and if exceeded, step 104 is to be executed, otherwise, return to step 101.

At step 104, a number of light beams reaching the proximity sensor is changed, such that the static data is triggered to change according to a change in the number of the light beams sensed by the proximity sensor.

In practical applications, the average static data of the proximity sensor is an average value of static data obtained by performing data collection of a fixed-frequency on the proximity sensor and calculation. Since a wide variety of types of existing proximity sensors, a time for the data collection is determined according to the type of the proximity sensor. Generally, the average value of the static data is obtained by performing data collection of a fixed frequency on the proximity sensor during a fixed period and calculation.

The changing the number of light beams reaching the proximity sensor such that the static data is triggered to change according to the change in the number of the light beams sensed by the proximity sensor includes: changing an effective working distance of lens of the proximity sensor by adjusting a position of the lens of the proximity sensor, to trigger the number of light beams reaching the proximity sensor through the lens to change with the effective working distance, such that the static data is triggered to change according to the change in the number of the light beams sensed by the proximity sensor.

The changing the effective working distance of the lens of the proximity sensor by adjusting the position of the lens of the proximity sensor includes: triggering, by reducing the effective working distance of the lens, a distance from the lens to a light source of the proximity sensor to be reduced synchronously, and triggering the number of light beams reaching the proximity sensor through the lens to be synchronously increased, such that the static data is synchronously increased according to an increase in the number of the light beams sensed by the proximity sensor, or triggering, by increasing the effective working distance of the lens, the distance from the lens to the light source of the proximity sensor to be increased synchronously, and triggering the number of light beams reaching the proximity sensor through the lens to be synchronously reduced, such that the static data is synchronously reduced according to a reduction in the number of the light beams sensed by the proximity sensor.

In practical applications, there is a negative correlation between the effective working distance of the lens and the static data, and the relationship of the negative correlation may be linear or non-linear, and may be adjusted according to actual needs. Since a position of the proximity sensor and a position of the light source is constant, in the case where the effective working distance of the lens is increased, a scattering effect of light beams passing through the lens is enhanced, and a number of light beams reaching the proximity sensor is synchronously reduced, such that the static data is synchronously reduced according to a reduction in the number of the light beams sensed by the proximity sensor. Conversely, in a case where the effective working distance of the lens is reduced, the scattering effect of light beams passing through the lens is weakened, and a number of light beams reaching the proximity sensor is synchronously increased, such that the static data is synchronously increased according to an increase in the number of the light beams sensed by the proximity sensor.

In a process of changing the effective working distance of the lens of the proximity sensor by adjusting the position of the lens of the proximity sensor, a lens mounted with a magnetic component is generally used. During use of the lens with the magnetic component, first, a forward command generating a forward current is sent to a coil motor, to trigger the coil motor to generate a magnetic force that attracts mutually with the magnetic component in the lens of the proximity sensor, and then the lens is triggered to move in a direction away from the light source of the proximity sensor under the magnetic force, to increase the effective working distance of the lens of the proximity sensor; or, first, a reverse command generating a reverse current is sent to the coil motor, to trigger the coil motor to generate a magnetic force that repels with the magnetic component in the lens of the proximity sensor, and then the lens is triggered to move in a direction approaching the light source of the proximity sensor under the magnetic force, to reduce the effective working distance of the lens of the proximity sensor.

In a process of changing the effective working distance of the lens of the proximity sensor by adjusting the position of the lens of the proximity sensor, a lens mounted with a crankshaft may also be used. During use of the lens with the crankshaft, first, a forward command generating a forward current is sent to the coil motor, and the crankshaft connected to the lens of the proximity sensor is driven by the coil motor to move forward, and then the lens is triggered to move in a direction away from the light source of the proximity sensor, to increase the effective working distance of the lens of the proximity sensor, or, a reverse command generating a reverse current is sent to the coil motor, and the crankshaft connected to the lens of the proximity sensor is driven by the coil motor to move reversely, and then the lens is triggered to move in a direction approaching the light source of the proximity sensor, to reduce the effective working distance of the lens of the proximity sensor.

In practical applications, if it is determined at step 103 that the preset range is not exceeded, the process may return to step 101 to continue monitoring the average static data of the proximity sensing, and may also end the monitoring process without processing.

FIG. 2 is a schematic diagram illustrating a structure of a calibration device for a proximity sensor according to an embodiment of the present disclosure. As shown in FIG. 2, the structure of the calibration device for the proximity sensor in an embodiment of the present disclosure includes a numerical collector 201, a numerical calculator 202, a numerical comparator 203, and a driver 204.

The numerical collector 201 is configured to collect static data of the proximity sensor.

The numerical calculator 202 is configured to calculate an average value of the static data to obtain an average static data of the proximity sensor.

The numerical comparator 203 is configured to compare the average static data with a preset range.

The driver 204 is configured to change a number of light beams reaching the proximity sensor, such that the static data is triggered to change according to a change in the number of the light beams sensed by the proximity sensor.

In practical applications, the driver is further configured to change an effective working distance of lens of the proximity sensor by adjusting a position of the lens of the proximity sensor, to trigger the number of light beams reaching the proximity sensor through the lens to change with the effective working distance, such that the static data is triggered to change according to the change in the number of the light beams sensed by the proximity sensor.

The driver is specifically configured to: trigger, by reducing the effective working distance of the lens, a distance from the lens to a light source of the proximity sensor to be reduced synchronously, and trigger the number of light beams reaching the proximity sensor through the lens to be synchronously increased, such that the static data is synchronously increased according to an increase in the number of the light beams sensed by the proximity sensor; or trigger, by increasing the effective working distance of the lens, the distance from the lens to the light source of the proximity sensor to be increased synchronously, and trigger the number of light beams reaching the proximity sensor through the lens to be synchronously reduced, such that the static data is synchronously reduced according to a reduction in the number of the light beams sensed by the proximity sensor.

In practical applications, there is a negative correlation between the effective working distance of the lens and the static data, and the relationship of the negative correlation may be linear or non-linear, and may be adjusted according to actual needs. Since a position of the proximity sensor and a position of the light source is constant, in the case where the effective working distance of the lens is increased, a scattering effect of light beams passing through the lens is enhanced, and a number of light beams reaching the proximity sensor is synchronously reduced, such that the static data is synchronously reduced according to a reduction in the number of the light beams sensed by the proximity sensor. Conversely, in a case where the effective working distance of the lens is reduced, the scattering effect of light beams passing through the lens is weakened, and a number of light beams reaching the proximity sensor is synchronously increased, such that the static data is synchronously increased according to an increase in the number of the light beams sensed by the proximity sensor.

In a process of changing the effective working distance of the lens of the proximity sensor by adjusting the position of the lens of the proximity sensor, a lens mounted with a magnetic component is generally used. During use of the lens with the magnetic component, the device further includes a controller, a signal interface and a coil motor. The controller is configured to send a forward command generating a forward current to the signal interface. The signal interface is configured to send the forward command from the controller to the coil motor. The coil motor is configured to receive the forward command from the signal interface, generate the forward current, and form a magnetic force that attracts mutually with the magnetic component in the lens, such that the lens moves in a direction away from a light source of the proximity sensor under the magnetic force, to increase the effective working distance of the lens of the proximity sensor. The controller is further configured to send a reverse command generating a reverse current to the signal interface. The signal interface is further configured to send the reverse command from the controller to the coil motor. The coil motor is further configured to receive the reverse command from the signal interface, generate the reverse current, and form a magnetic force that repels with the magnetic component in the lens, such that the lens moves in a direction approaching the light source of the proximity sensor under the magnetic force, to reduce the effective working distance of the lens of the proximity sensor.

In a process of changing the effective working distance of the lens of the proximity sensor by adjusting the position of the lens of the proximity sensor, a lens mounted with a crankshaft may also be used. During use of the lens with the crankshaft, the device further includes a controller, a signal interface and a coil motor. The controller is configured to send a forward command generating a forward current to the signal interface. The signal interface is configured to send the forward command from the controller to the coil motor. The coil motor is configured to receive the forward command from the signal interface, and drive the crankshaft connected to the lens of the proximity sensor to move forward, such that the lens moves in a direction away from a light source of the proximity sensor, to increase the effective working distance of the lens of the proximity sensor. The controller is further configured to send a reverse command generating a reverse current to the signal interface. The signal interface is further configured to send the reverse command from the controller to the coil motor. The coil motor is further configured to receive the reverse command from the signal interface, and drive the crankshaft connected to the lens of the proximity sensor to move reversely, such that the lens moves in a direction approaching the light source of the proximity sensor, to reduce the effective working distance of the lens of the proximity sensor.

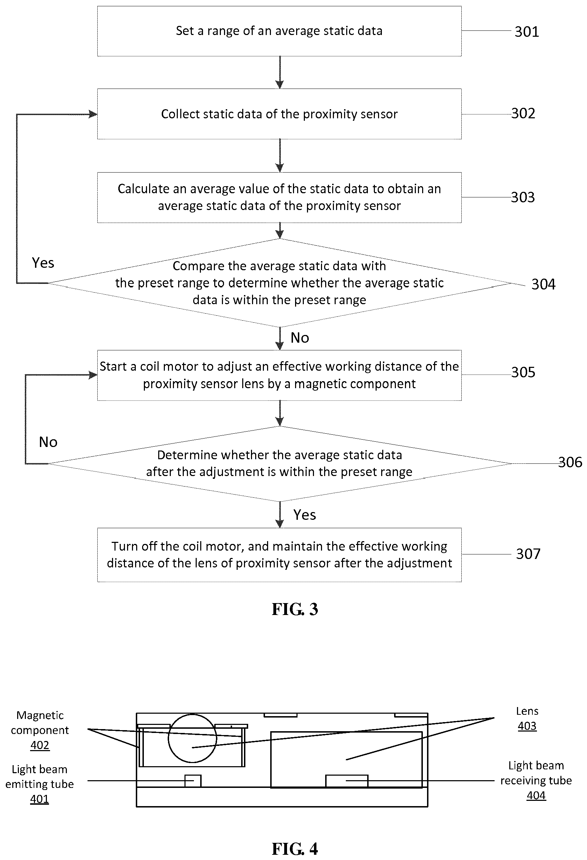

FIG. 3 is a flow chart of a calibration process of a proximity sensor with a magnetic component in Embodiment 1 of the present disclosure. As shown in FIG. 3, in Embodiment 1 of the present disclosure, the calibration process of the proximity sensor with a magnetic component includes the following steps 301-307.

At step 301, a range of an average static data is set.

At step 302, static data of the proximity sensor is collected.

At step 303, an average value of the static data is calculated to obtain an average static data of the proximity sensor.

At step 304, the average static data is compared with the preset range to determine whether the average static data is within the preset range, and if not, step 305 is to be performed, otherwise, step 302 is to be performed.

At step 305, a coil motor is started to adjust an effective working distance of the proximity sensor lens by a magnetic component.

At step 306, whether the average static data after the adjustment is within the preset range is determined; and if so, step 307 is to be executed, otherwise, return to step 305.

At step 307, the coil motor is turned off, and the effective working distance of the lens of proximity sensor after the adjustment is maintained.

In Embodiment 1 of the present disclosure, the proximity sensor installed in a terminal utilizes an 11-bit analog/digital converter, the lens of the proximity sensor is mounted with a magnetic component, a range of sampled data of the proximity sensor is 0-2047, and a threshold range of the average static data is set as 20-500. When the average static data is between 20-500, the controller may determine that the average static data is normal data, and no calibration is needed; when the average static data is less than 20, the controller may determine that this is a set of abnormal data. In this case, the controller sends a reverse command to the coil motor to generate a reverse current. After the reverse command is received by a coil motor controller, the coil motor internally outputs a constant reverse current with a fixed direction, and the current passes the coil to generate a magnetic field, and generate a magnetic force that attracts mutually with the magnetic component mounted in the lens, such that the lens is triggered to move in a direction approaching the light source of the proximity sensor, to reduce the effective working distance of the lens of the proximity sensor. In this case, an effective angle of light beams passing through the lens is increased, a scattering effect of the light beams passing through the lens is weakened, and a number of light beams reaching the proximity sensor is synchronously increased, such that the static data is synchronously increased according to an increase in the number of the light beams sensed by the proximity sensor.

When the effective working distance of the lens is adjusted by the coil motor, the coil motor may realize a change of the effective working distance by the stepwise adjustment according to a traversal table in the controller. For example, in Embodiment 1, the threshold range of the average static data is 20-500. When the average static data as detected is lower than 20, a step of each adjustment is determined to be 50 according to the traversal table, and after one adjustment, the average static data can be adjusted to the threshold range.

Similarly, when the average static data as detected exceeds 500, the controller determines that this is a set of abnormal data. In this case, the controller sends a forward command to the coil motor to generate a forward current. After the reverse command is received by the coil motor, the coil motor internally outputs a constant forward current with a fixed direction, and the current passes the coil to generate a magnetic field, and generate a magnetic force repels with the magnetic component mounted in the lens, such that the lens is triggered to move in a direction away from the light source of the proximity sensor, to increase the effective working distance of the lens of the proximity sensor. In this case, the effective angle of light beams passing through the lens is reduced, and a scattering effect of the light beams passing through the lens is enhanced, and a number of light beams reaching the proximity sensor is synchronously reduced, such that the static data is synchronously reduced according to an reduction in the number of the light beams sensed by the proximity sensor.

When the effective working distance of the lens is adjusted by the coil motor, the coil motor may realize the change of the effective working distance by the stepwise adjustment according to the traversal table in the controller. For example, in Embodiment 1, the threshold range of the average static data is 20∼500. When the average static data as detected is greater than 500, a step of each adjustment is determined to be 70 according to the traversal table. After at least one adjustment, the average static data can be adjusted to the threshold range. Generally, when the average static data after the adjustment is less than 500, the average static data is further adjusted to a range of 100∼150.

FIG. 4 is a side view of a proximity sensor with a magnetic component in Embodiment 1 of the present disclosure. As shown in FIG. 4, in Embodiment 1 of the present disclosure, the proximity sensor with the magnetic component includes a light beam emitting tube 401, a magnetic component 402, a lens 403, and a light beam receiving tube 404.

The light beam emitting tube 401 is configured to emit a light beam.

The magnetic component 402 is configured to change an effective working distance of the lens.

The lens 403 is configured to refract the light beam.

The light beam receiving tube 404 is configured to receive the light beam refracted by the lens.

The side view shown in FIG. 4 is merely an exemplary side view of the proximity sensor with the magnetic component. In practical applications, the light beam emitting tube 401 and the light beam receiving tube 404 may be located at a same side of the lens 403, and may also be located at two sides of the lens 403, and selection of the position of the light beam emitting tube 401 and the light beam receiving tube 404 may be determined by a size of space in which the proximity sensor with the magnetic component is mounted.

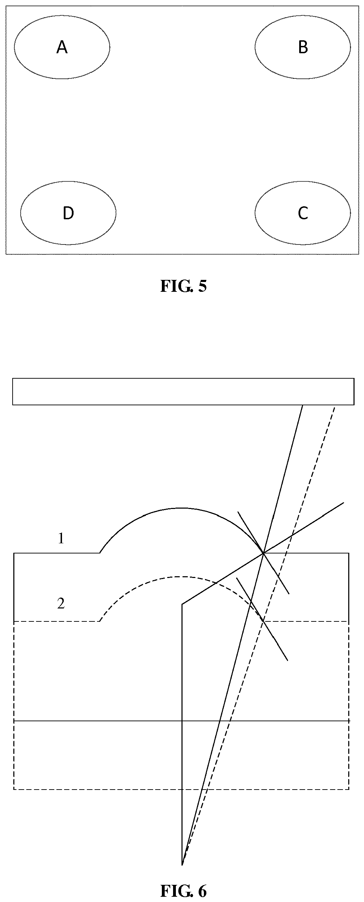

FIG. 5 is a bottom view of the lens of the proximity sensor with the magnetic component in Embodiment 1 of the present disclosure, as shown in FIG. 5, in Embodiment 1, the lens has four magnetic components A, B, C, and D. A forward current of the coil motor triggers the coil motor to form a magnetic force that repels with the magnetic component in the lens of the proximity sensor, and then the lens is triggered to move in a direction away from the light source of the proximity sensor under the magnetic force, to increase the effective working distance of the lens of the proximity sensor; or a reverse current of the coil motor triggers the coil motor to form a magnetic force that attracts mutually with the magnetic component in the lens of the proximity sensor, and then the lens is triggered to move in a direction approaching the light source of the proximity sensor under the magnetic force, to reduce the effective working distance of the lens of the proximity sensor.

FIG. 6 is a schematic diagram of a process of changing an effective working distance of a lens of a proximity sensor with a magnetic component in Embodiment 1 of the present disclosure; as shown in FIG. 6, the lens of the proximity sensor is moved from a position 1 to a position 2 to reduce the effective working distance of the lens. i.e., to reduce the distance between the lens and the light beam emitting tube of the proximity sensor. Thus, an effective angle of light beams passing through the lens is increased, and a scattering effect of the light beams passing through the lens is weakened, and a number of light beams reaching the proximity sensor is synchronously increased, such that the static data is synchronously increased according to an increase in the number of the light beams sensed by the proximity sensor.

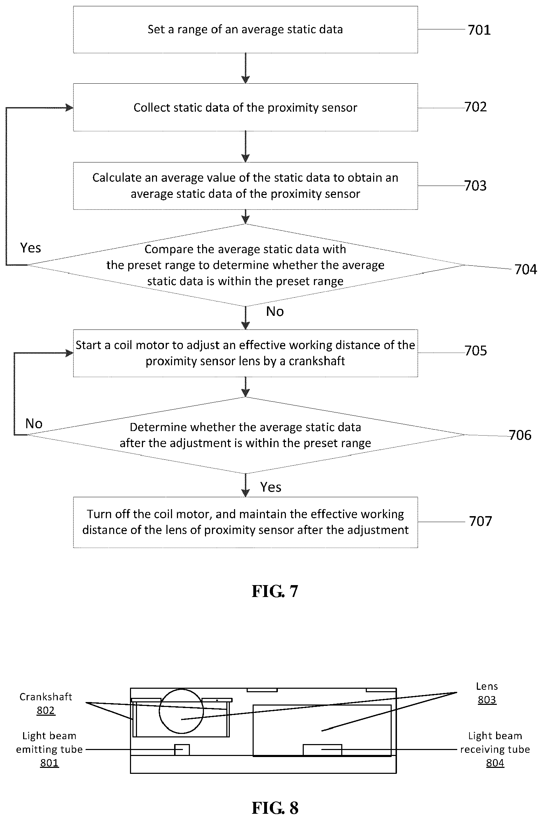

FIG. 7 is a flow chart illustrating a calibration process of a proximity sensor with a crankshaft in Embodiment 2 of the present disclosure. As shown in FIG. 7, the calibration process of the proximity sensor with the crankshaft in Embodiment 2 of the present disclosure includes the following steps 701-707.

At step 701, a range of an average static data is set.

At step 702, static data of the proximity sensor is collected.

At step 703, an average value of the static data is calculated to obtain an average static data of the proximity sensor.

At step 704, the average static data is compared with the preset range to determine whether the average static data is within the preset range, and if not, step 705 is to be performed, otherwise, step 702 is to be performed.

At step 705, a coil motor is started to adjust an effective working distance of the proximity sensor lens by a crankshaft.

At step 706, whether the average static data after the adjustment is within the preset range is determined; and if so, step 707 is to be executed, otherwise, return to step 705.

At step 707, the coil motor is turned off, and the effective working distance of the lens of the proximity sensor after the adjustment is maintained.

In Embodiment 2 of the present disclosure, the proximity sensor installed in a terminal utilizes an 11-bit analog/digital converter, the lens of the proximity sensor is mounted with a crankshaft, one end of the crankshaft is connected to the lens, and the other end of the crankshaft is connected to the a coil motor. A range of sampled data of the proximity sensor is 0-2047, and a threshold range of the average static data is set as 20-500. When the average static data is between 20-500, the controller may determine that the average static data is normal data, and no calibration is needed; when the average static data is less than 20, the controller may determine that this is a set of abnormal data. In this case, the controller sends a reverse command to the coil motor to generate a reverse current. After the reverse command is received by a coil motor controller, the coil motor internally outputs a constant reverse current with a fixed direction, the reverse current drives the coil motor to operate reversely, and the coil motor drives the crankshaft connected to the lens of the proximity sensor to operate reversely, such that the lens is triggered to move in a direction approaching the light source of the proximity sensor, to reduce the effective working distance of the lens of the proximity sensor. In this case, an effective angle of light beams passing through the lens is increased, a scattering effect of the light beams passing through the lens is weakened, and a number of light beams reaching the proximity sensor is synchronously increased, such that the static data is synchronously increased according to an increase in the number of the light beams sensed by the proximity sensor.

When the effective working distance of the lens is adjusted by the coil motor, the coil motor may realize a change of the effective working distance by the stepwise adjustment according to a traversal table in the controller. For example, in Embodiment 2, the threshold range of the average static data is 20-500. When the average static data as detected is lower than 20, a step of each adjustment is determined to be 50 according to the traversal table, and after one adjustment, the average static data can be adjusted to the threshold range.

Similarly, when the average static data as detected exceeds 500, the controller determines that this is a set of abnormal data. In this case, the controller sends a forward command to the coil motor to generate a forward current. After the forward command is received by the coil motor, the coil motor internally outputs a constant forward current with a fixed direction, the coil motor drives the crankshaft connected to the lens of the proximity sensor to operate forward, such that the lens is triggered to move in a direction away from the light source of the proximity sensor, to increase the effective working distance of the lens of the proximity sensor. In this case, the effective angle of light beams passing through the lens is reduced, and a scattering effect of the light beams passing through the lens is enhanced, and a number of light beams reaching the proximity sensor is synchronously reduced, such that the static data is synchronously reduced according to an reduction in the number of the light beams sensed by the proximity sensor.

When the effective working distance of the lens is adjusted by the coil motor, the coil motor may realize the change of the effective working distance by the stepwise adjustment according to the traversal table in the controller. For example, in Embodiment 2, the threshold range of the average static data is 20∼500. When the average static data as detected is greater than 500, a step of each adjustment is determined to be 70 according to the traversal table. After at least one adjustment, the average static data can be adjusted to the threshold range. Generally, when the average static data after the adjustment is less than 500, the average static data is further adjusted to a range of 100∼150.

FIG. 8 is a side view of the proximity sensor with the crankshaft in Embodiment 2 of the present disclosure, as shown in FIG. 8, in Embodiment 2 of the present disclosure, the proximity sensor with the crankshaft includes a light beam emitting tube 801, a crankshaft 802, a lens 803, and a light beam receiving tube 804.

The light beam emitting tube 801 is configured to emit a light beam.

The crankshaft 802 is configured to change an effective working distance of the lens.

The lens 403 is configured to refract the light beam.

The light beam receiving tube 404 is configured to receive the light beam refracted by the lens.

The side view shown in FIG. 8 is merely an exemplary side view of the proximity sensor with the crankshaft. In practical applications, the light beam emitting tube 801 and the light beam receiving tube 804 may be located at a same side of the lens 803, and may also be located at two sides of the lens 803, and selection of the position of the light beam emitting tube 801 and the light beam receiving tube 804 may be determined by a size of space in which the proximity sensor with the crankshaft is mounted.

An embodiment of the present disclosure further provides a computer readable storage medium storing thereon computer executable instructions that, when executed by a processor, cause the processor to perform the methods described above.

Those of ordinary skill in the art will appreciate that all or some of steps of the method disclosed above, a system, and functional blocks/units of the device descried above may be implemented as software, firmware, hardware, and a suitable combination thereof. In a hardware implementation, a division between functional modules/units mentioned in the above description does not necessarily correspond to a division of physical components; for example, a physical component may have multiple functions, or a function or step may be performed by a combination of several physical components. Some or all of the components may be implemented as software executed by a processor, such as a digital signal processor or a microprocessor, or as hardware, or as an integrated circuit, such as an application specific integrated circuit. Such software may be distributed on a computer readable medium, which may include computer storage media (or non-transitory media) and communication media (or transitory media). As is well known to those of ordinary skill in the art, the term computer storage medium includes volatile media and nonvolatile media, removable media and non-removable media implemented in any method or technology for storing information, such as computer readable instructions, data structures, program modules or other data. Computer storage media includes, but is not limited to, RAM, ROM, EEPROM, flash memory or other memory technology, CD-ROM, digital versatile disc (DVD) or other optical disc storage, magnetic cartridge, magnetic tape, magnetic disk storage or other magnetic storage device, or any other medium may be used to store desired information and can be accessed by a computer. Moreover, it is well known to those skilled in the art that the communication media generally includes computer readable instructions, data structures, program modules, or other data in a modulated data signal, such as a carrier or other transport mechanism, and can include any information delivery media.

The above embodiments are merely exemplary embodiments of the present disclosure, and are not intended to limit the scope of the present disclosure, and any amendments, equivalents, and improvements made within the spirit and principles of the present disclosure should be regarded as within the scope of the present disclosure.

### Industrial applicability

The calibration method and device for a proximity sensor desired to be provided by an embodiment of the present disclosure includes: calculating static data collected by a proximity sensor to obtain an average static data of the proximity sensor; comparing the average static data with a preset range; and changing, if the average static data exceeds the preset range, a number of light beams reaching the proximity sensor, such that the static data is triggered to change according to a change in the number of the light beams sensed by the proximity sensor. Au such, the proximity sensor can be directly adjusted to ensure the accuracy of the average static data of the proximity sensor, avoiding problems of bottom noise saturation and "black hair-zero distance" caused by software calibration.

## Claims

1. A calibration method for a proximity sensor, comprising:
collecting static data of the proximity sensor;
calculating an average value of the static data to obtain an average static data of the proximity sensor;
comparing the average static data with a preset range; and
changing, if the average static data exceeds the preset range, a number of light beams reaching the proximity sensor, such that the static data is triggered to change according to a change in the number of the light beams sensed by the proximity sensor.

2. The method of claim 1 wherein the changing the number of light beams reaching the proximity sensor such that the static data is triggered to change according to the change in the number of the light beams sensed by the proximity sensor comprises:
changing an effective working distance of lens of the proximity sensor by adjusting a position of the lens of the proximity sensor, to trigger the number of light beams reaching the proximity sensor through the lens to change with the effective working distance, such that the static data is triggered to change according to the change in the number of the light beams sensed by the proximity sensor.

3. The method of claim 2, wherein the changing the effective working distance of the lens of the proximity sensor by adjusting the position of the lens of the proximity sensor comprises:
triggering, by reducing the effective working distance of the lens, a distance from the lens to a light source of the proximity sensor to be reduced synchronously, and triggering the number of light beams reaching the proximity sensor through the lens to be synchronously increased, such that the static data is synchronously increased according to an increase in the number of the light beams sensed by the proximity sensor; or
triggering, by increasing the effective working distance of the lens, the distance from the lens to the light source of the proximity sensor to be increased synchronously, and triggering the number of light beams reaching the proximity sensor through the lens to be synchronously reduced, such that the static data is synchronously reduced according to a reduction in the number of the light beams sensed by the proximity sensor.

4. The method of claim 2, wherein the changing the effective working distance of the lens of the proximity sensor by adjusting the position of the lens of the proximity sensor comprises:
sending a forward command generating a forward current to a coil motor, and triggering the coil motor to generate a magnetic force that attracts mutually with a magnetic component in the lens of the proximity sensor, such that the lens moves in a direction away from a light source of the proximity sensor under the magnetic force, to increase the effective working distance of the lens of the proximity sensor; or
sending a reverse command generating a reverse current to the coil motor, and triggering the coil motor to generate a magnetic force that repels with the magnetic component in the lens of the proximity sensor, such that the lens moves in a direction approaching the light source of the proximity sensor under the magnetic force, to reduce the effective working distance of the lens of the proximity sensor.

5. The method of claim 2, wherein the changing the effective working distance of the lens of the proximity sensor by adjusting the position of the lens of the proximity sensor comprises:
sending a forward command generating a forward current to a coil motor, and driving, by the coil motor, a crankshaft connected to the lens of the proximity sensor to move forward, such that the lens moves in a direction away from a light source of the proximity sensor, to increase the effective working distance of the lens of the proximity sensor; or
sending a reverse command generating a reverse current to the coil motor, and driving, by the coil motor, the crankshaft connected to the lens of the proximity sensor to move reversely, such that the lens moves in a direction approaching the light source of the proximity sensor, to reduce the effective working distance of the lens of the proximity sensor.

6. A calibration device for a proximity sensor, comprising:
a numerical collector configured to collect static data of the proximity sensor;
a numerical calculator configured to calculate an average value of the static data to obtain an average static data of the proximity sensor;
a numerical comparator configured to compare the average static data with a preset range; and
a driver configured to change a number of light beams reaching the proximity sensor, such that the static data is triggered to change according to a change in the number of the light beams sensed by the proximity sensor.

7. The device of claim 6, wherein,
the driver is further configured to change an effective working distance of lens of the proximity sensor by adjusting a position of the lens of the proximity sensor, to trigger the number of light beams reaching the proximity sensor through the lens to change with the effective working distance, such that the static data is triggered to change according to the change in the number of the light beams sensed by the proximity sensor.

8. The device of claim 7, wherein,
the driver is further configured to:
trigger, by reducing the effective working distance of the lens, a distance from the lens to a light source of the proximity sensor to be reduced synchronously, and trigger the number of light beams reaching the proximity sensor through the lens to be synchronously increased, such that the static data is synchronously increased according to an increase in the number of the light beams sensed by the proximity sensor, or
trigger, by increasing the effective working distance of the lens, the distance from the lens to the light source of the proximity sensor to be increased synchronously, and trigger the number of light beams reaching the proximity sensor through the lens to be synchronously reduced, such that the static data is synchronously reduced according to a reduction in the number of the light beams sensed by the proximity sensor.

9. The device of claim 7, wherein,
the lens is mounted with a magnetic component;
the driver comprises a controller, a signal interface and a coil motor, wherein
the controller is configured to send a forward command generating a forward current to the signal interface;
the signal interface is configured to send the forward command from the controller to the coil motor; and
the coil motor is configured to receive the forward command from the signal interface, generate the forward current, and form a magnetic force that attracts mutually with the magnetic component in the lens, such that the lens moves in a direction away from a light source of the proximity sensor under the magnetic force, to increase the effective working distance of the lens of the proximity sensor;
the controller is further configured to send a reverse command generating a reverse current to the signal interface;
the signal interface is further configured to send the reverse command from the controller to the coil motor; and
the coil motor is further configured to receive the reverse command from the signal interface, generate the reverse current, and form a magnetic force that repels with the magnetic component in the lens, such that the lens moves in a direction approaching the light source of the proximity sensor under the magnetic force, to reduce the effective working distance of the lens of the proximity sensor.

10. The device of claim 7, wherein,
the lens is mounted with a crankshaft connected to the driver,
the driver comprises a controller, a signal interface and a coil motor, wherein
the controller is configured to send a forward command generating a forward current to the signal interface;
the signal interface is configured to send the forward command from the controller to the coil motor; and
the coil motor is configured to receive the forward command from the signal interface, and drive the crankshaft connected to the lens of the proximity sensor to move forward, such that the lens moves in a direction away from a light source of the proximity sensor, to increase the effective working distance of the lens of the proximity sensor;
the controller is further configured to send a reverse command generating a reverse current to the signal interface;
the signal interface is further configured to send the reverse command from the controller to the coil motor; and
the coil motor is further configured to receive the reverse command from the signal interface, and drive the crankshaft connected to the lens of the proximity sensor to move reversely, such that the lens moves in a direction approaching the light source of the proximity sensor, to reduce the effective working distance of the lens of the proximity sensor.

11. A computer readable storage medium storing thereon computer executable instructions that, when executed by a processor, cause the processor to perform the method of any one of claims 1-5.
